# EUROPÄISCHE PATENTSCHRIFT

(11) **EP 2 478 577 B1**
(45) Veröffentlichungstag und Bekanntmachung des Hinweises auf die Patenterteilung: **02.03.2016**
(21) Anmeldenummer: 10739526.1
(22) Anmeldetag: 28.07.2010
(51) Int. Cl.: H01M 2/12

(54) **VERSCHLUSSSTOPFENANORDNUNG FÜR EINEN AKKUMULATOR**
SEALING PLUG ARRANGEMENT FOR A BATTERY
SYSTÈME DE BOUCHON DE FERMETURE POUR ACCUMULATEUR

(30) Priorität: 16.09.2009 DE 102009041417
(43) Veröffentlichungstag der Anmeldung: 25.07.2012
(73) Patentinhaber: Johnson Controls Autobatterie GmbH & Co. KGaA, 30419 Hannover (DE)
(72) Erfinder: STREUER, Peter, 30559 Hannover (DE); KOCH, Ingo, 31789 Hameln (DE); WERLE, Thorsten, 31303 Burgdorf (DE); MEISSNER, Eberhard, 31515 Wunstorf (DE)
(74) Vertreter: Trinks, Ole
(86) Internationale Anmeldenummer: PCT/EP2010/004618
(87) Internationale Veröffentlichungsnummer: WO 2011/032617

(56) Entgegenhaltungen:
- WO-A1-01/82395
- DE-U1- 29 714 031

## Beschreibung

Die Erfindung betrifft eine Verschlussstopfenanordnung für einen Akkumulator gemäß dem Oberbegriff des Patentanspruchs 1 sowie einen Akkumulator mit einer solchen Verschlussstopfenanordnung.

Derartige Verschlussstopfenanordnungen finden beispielsweise in der Akkumulatorentechnik Anwendung, z. B. zum Verschließen von Gehäuseöffnungen von Blei-Säure-Batterien für Kraftfahrzeuge. Das Gehäuse des Akkumulators weist im Allgemeinen einen in mehrere Kammern unterteilten Gehäuseraum auf, in dem Flüssigkeit in Form von als Elektrolyt verwendeter Säure vorgesehen ist. Je nach Ausführungsform des Akkumulators kann die Flüssigkeit in einem Vliesmaterial aufgenommen und damit gebunden sein. Zur Befüllung des Gehäuses mit der Säure ist wenigstens eine Gehäuseöffnung als Einfüllöffnung vorgesehen. Die Gehäuseöffnung muss für einen praktischen Betrieb des Akkumulators abgedichtet verschließbar sein, um einen unerwünschten Austritt von Säure zu vermeiden und einen gewissen - wenn auch geringen - Oberdruck im Akkumulatorgehäuse zu halten. Zur Sicherung des Akkumulators gegen einen unerwünscht hohen Überdruck im Gehäuseinneren ist es üblich, eine Überdrucksicherung vorzusehen, die bei zu hohem Druck einen Auslass von Gas aus dem Gehäuse erlaubt, z.B. über die Einfüllöffnung.

Für die Abdichtung der Gehäuseöffnung wird bei bekannten Gehäusen eine Verschlussstopfenanordnung vorgesehen, die ein Stopfenteil und einen Stopfenhalter aufweist. Im Stand der Technik sind verschiedene Vorschläge für solche Verschlussstopfenanordnungen bekannt, z. B. DE 10 2007 061 784 A1, EP 1 001 905 B1, WO 01/82395 A1 oder EP 1 211 738 B1.

Der Erfindung liegt die Aufgabe zu Grunde, eine verbesserte Verschlussstopfenanordnung anzugeben, die kostengünstig realisiert werden kann und zuverlässig ist.

Diese Aufgabe wird durch die in dem Patentanspruch 1 angegebene Erfindung gelöst. Vorteilhafte Weiterbildungen der Erfindung sind in den Unteransprüchen angegeben.

Die Erfindung hat den Vorteil, die für eine zuverlässige Funktion der Überdrucksicherung erforderlichen Elemente voneinander zu entflechten. Bei bekannten Lösungen, z.B. EP 1 001 905 B1, wird ein Ventilstopfen vorgeschlagen, bei dem alle Elemente der Überdrucksicherung in einem Bauteil vorgesehen sind, nämlich in dem Stopfenteil. Bei der vorliegenden Erfindung wurde erkannt, dass für eine zuverlässige Funktion der Überdrucksicherung einerseits der Strömungsquerschnitt, der ausströmendem Gas zur Verfügung steht, und andererseits die Parameter, die Einfluss auf den Ansprechdruck haben, bei dem die Überdrucksicherung öffnet und Gas ausströmen lässt, zu optimieren sind. Die den Ansprechdruck beeinflussenden Parameter sind z.B. die Materialelastizität des Stopfenteils, die unter anderem durch die Formgebung in dem Überdrucksicherungsbereich bestimmt wird, und die Wirkfläche für den anstehenden Gasdruck. Mit der vorliegenden Erfindung wird der Strömungskanal für austretendes Gas zumindest zum Teil im Stopfenhalter vorgesehen, während weitere, den Ansprechdruck beeinflussende Parameter dem Stopfenteil zugewiesen sind.

Durch die hiermit erzielte Entflechtung der Einflussgrößen ist es möglich, jeweils für sich die einzelnen Parameter der Überdrucksicherungsfunktion zu optimieren, ohne auf den jeweils anderen Parameter nachteiligen Einfluss zu nehmen. So kann z.B. der Strömungsquerschnitt durch entsprechende Ausgestaltung des in dem Stopfenhalters vorgesehenen Strömungskanals optimiert werden, ohne die Formgebung und damit die Materialelastizität des Stopfenteils zu verändern. In dem Stopfenteil kann die Materialelastizität in dem Überdrucksicherungsbereich durch entsprechende Formgebung, z.B. durch Vorsehen einer Aussparung an dem Stopfenteil auf der nicht vom Gasdruck beaufschlagten Seite, entsprechend dem Bedarf gewählt werden und damit der Ansprechdruck auf den gewünschten Wert optimiert werden. Diese Optimierung beeinflusst wiederum nicht den Strömungsquerschnitt, d.h. sie ist von der Optimierung des Strömungsquerschnitts entflochten.

Neben der Überdrucksicherungsfunktion weist die erfindungsgemäße Verschlussstopfenanordnung eine Dichtfunktion auf. Die Dichtfunktion dichtet in einem Druckbereich unterhalb des Ansprechdrucks einen Innenraum des Akkumulators gegenüber der Umgebung, z.B. der Atmosphäre, ab. Vorteilhaft kann auch die Dichtfunktion unabhängig optimiert werden. Im Ergebnis kann hiermit eine sowohl hinsichtlich der Dichtfunktion als auch hinsichtlich der Überdrucksicherungsfunktion zuverlässig arbeitende Verschlussstopfenanordnung angegeben werden, bei der sowohl das Stopfenteil als auch der Stopfenhalter einfach und preisgünstig herzustellen sind.

Vorteilhaft liegt der Ansprechdruck der Überdrucksicherungsfunktion bei etwa 75 mbar. Die Abdichtung durch die erfindungsgemäße Verschlussstopfenanordnung wird auch bei Unterdruck im Innenraum des Akkumulators gewährleistet.

Gemäß der Erfindung weist der Stopfenhalter an seiner Innenseite in einem hohlen Bereich wenigstens einen Strömungskanal auf. Vorteilhaft steht der Strömungskanal in Wirkverbindung mit dem Überdrucksicherungsbereich, z.B. dadurch, dass der Strömungskanal sich bis zu einem Überdrucksicherungsbereich hin erstreckt. Somit wird ein der Überdrucksicherungsfunktion zugeordnetes Element dem Stopfenhalter zugeordnet und muss daher nicht mehr in dem Stopfenteil vorgesehen werden. Das Stopfenteil kann damit im Bereich eines Halteabschnitts, in dem das Stopfenteil bei Anbringung im hohlen Bereich in dem Stopfenhalter gehalten wird, homogen hergestellt werden und muss in diesem Bereich nicht mit einem Strömungskanal versehen werden. Der an der Innenseite des Stopfenhalters vorgesehene Strömungskanal erlaubt einen Auslass von Gas bei zu hohem Überdruck über den Überdrucksicherungsbereich. Als Überdrucksicherungsbereich wird derjenige Bereich der Verschlussstopfenanordnung verstanden, der für die Überdrucksicherung dient, z.B. der Bereich, in dem der Gasdruck ansteht. Dies kann je nach Ausgestaltung ein räumlich ausgedehnter Bereich der Verschlussstopfenanordnung oder eine relativ kleine Stelle mit geringer räumlicher Ausdehnung sein. Der Überdrucksicherungsbereich kann insbesondere eine Ventilstelle enthalten, an der bei Überschreiten des Ansprechdrucks Gas ausgelassen wird.

Gemäß einer vorteilhaften Weiterbildung der Erfindung weist das Stopfenteil einen Kragen auf, der einen Anschlag beim Einsetzen des Stopfenteils in den Stopfenhalter bildet. Dies erlaubt vorteilhaft ein einfaches Einsetzen des Stopfenteils in den Stopfenhalter, wobei mit wenig Aufwand das Stopfenteil korrekt positioniert werden kann. Der Kragen kann beispielsweise vollständig umlaufend um einen Zentralabschnitt des Stopfenteils angeordnet sein und auf diese Weise für eine Abdichtung der Gehäuseöffnung sorgen.

Gemäß einer vorteilhaften Weiterbildung der Erfindung weist der Kragen eine beim Einsetzen des Stopfenteils in den Stopfenhalter in Richtung des Stopfenhalters weisende Dichtwulst auf. Die Dichtwulst ist zur Anlage an einer Dichtungsfläche des Stopfenhalters vorgesehen. Mittels der Dichtwulst kann vorteilhaft eine einfach herzustellende, wirksam abdichtende Anordnung zur Abdichtung der Gehäuseöffnung geschaffen werden. Vorteilhaft kann ein Teil des Kragens bzw. ein Teil der Dichtwulst Bestandteil des Überdrucksicherungsbereichs sein.

Gemäß einer vorteilhaften Weiterbildung der Erfindung weist das Stopfenteil an seiner von dem Halteabschnitt abgewandten Seite im Bereich des Überdrucksicherungsbereichs eine Aussparung auf. Durch die Aussparung ist das Material des Stopfenteils im Bereich des Überdrucksicherungsbereichs geschwächt, wodurch es leichter verformbar ist. Hierdurch kann eine definierte Öffnung der Überdrucksicherung bei einem vorgegebenen Überdruck sichergestellt werden. Die Aussparung kann vorteilhaft direkt bei der Herstellung des Stopfenteils durch entsprechende Formung des Materials hergestellt werden, z. B. durch geeignete Formgebung beim Vulkanisieren. Alternativ kann die Aussparung durch Abtragung von Material an dem Stopfenteil in einem weiteren Bearbeitungsschritt erfolgen, z. B. mit einem spanenden Verfahren. Das Vorsehen der Aussparung auf der von dem Halteabschnitt abgewandten Seite, d.h. auf der Seite, auf der der Gasdruck nicht ansteht, hat den Vorteil, dass die Formgebung und Größe der Aussparung den Strömungsquerschnitt für austretendes Gas bei Ansprechen der Überdrucksicherung nicht beeinflussen. Hierdurch kann die Überdrucksicherungsfunktion hinsichtlich des Ansprechdrucks über die Formgebung und Größe der Aussparung einfacher und gezielter den hierfür vorliegenden Anforderungen angepasst werden.

Gemäß einer vorteilhaften Weiterbildung der Erfindung weist die Aussparung in einer Draufsicht auf das Stopfenteil eine im Wesentlichen lineare oder teilkreisförmige Kontur auf. Dies erlaubt eine einfache Herstellung der Aussparung.

Gemäß einer vorteilhaften Weiterbildung der Erfindung weist das Stopfenteil im Bereich des Überdrucksicherungsbereichs eine Stelle mit erhöhter Flexibilität auf. Die Stelle mit erhöhter Flexibilität kann je nach Ausgestaltung des Stopfenteils zusätzlich oder alternativ zu der zuvor erläuterten Aussparung vorgesehen werden. Die Stelle mit erhöhter Flexibilität erlaubt es, die Parameter für die Überdrucksicherungsfunktion nach Bedarf präzise vorzusehen, wie z. B. den Öffnungsdruck oder den Öffnungsquerschnitt in Abhängigkeit vom Überdruck. Die Stelle mit erhöhter Flexibilität kann z.B. durch Vorsehen einer Materialschwächung des Stopfenmaterials realisiert werden.

Gemäß einer vorteilhaften Weiterbildung der Erfindung besteht das Stopfenteil wenigstens zum Teil aus gummielastischem Material. Vorteilhaft wird dabei insbesondere im Überdrucksicherungsbereich gummielastisches Material verwendet. Auf diese Weise kann die Überdrucksicherung fertigungstechnisch mit wenig Aufwand vorgesehen werden, insbesondere ohne zusätzliche Gelenke oder Scharniere.

Gemäß einer vorteilhaften Weiterbildung der Erfindung weist der Stopfenhalter an seiner Innenseite im hohlen Bereich eine Mehrzahl von Strömungskanälen auf. Vorteilhaft können die Strömungskanäle über den Innenumfang des Stopfenhalters etwa gleichmäßig verteilt sein. Dies hat den Vorteil, dass der Strömungsquerschnitt für die Überdrucksicherung relativ groß ist.

Gemäß einer vorteilhaften Weiterbildung der Erfindung ist der wirksame Innendurchmesser des hohlen Bereichs des Stopfenhalters größer - zumindest geringfügig größer - als der Außendurchmesser des Halteabschnitts des Stopfenteils. Hierdurch wird das Stopfenteil mit etwas Spiel im Stopfenhalter gehalten, was eine gewisse Relativbewegung zwischen dem Halteabschnitt und dem Stopfenhalter ermöglicht. Bei hohem Gasdruck im Innenraum des Akkumulators erfolgt nämlich eine gewisse Kompression des oberen Bereichs des Stopfenteils, d.h. des außerhalb des hohlen Bereichs des Stopfenhalters vorgesehenen Stopfenteil-Bereichs, so dass sich der Halteabschnitt gegenüber dem Stopfenhalter geringfügig nach oben hin verschiebt. Durch das Spiel kann sich das Stopfenteil nach Verringerung des Gasdrucks wieder ausdehnen und in seine ursprüngliche Position zurückkehren. Hierdurch kann eine erneute Abdichtung durch das Stopfenteil bzw. die Dichtwulst definiert gewährleistet werden.

Gemäß einer vorteilhaften Weiterbildung der Erfindung weist der Stopfenhalter im hohlen Bereich auf zwischen den Strömungskanälen gebildeten Rippen angeordnete, hervorstehende Zentrierelemente auf. Die Zentrierelemente sind somit jenseits des Strömungskanals bzw. der Strömungskanäle angeordnet, z. B. zwischen zwei Strömungskanälen. Die Zentrierelemente erlauben vorteilhaft eine sichere Zentrierung des Stopfenteils in dem Stopfenhalter, wobei vorteilhaft der durch die Zentrierelemente definierte Innendurchmesser etwas größer gewählt ist als der Außendurchmesser des Halteabschnitts des Stopfenteils. Hierdurch wird das Stopfenteil mit dem zuvor beschriebenen Spiel im Stopfenhalter gehalten, was eine gewisse Relativbewegung zwischen dem Halteabschnitt und den Zentrierelementen ermöglicht.

Die Zentrierelemente können vorteilhaft als in Längsrichtung der zwischen den Strömungskanälen gebildeten Rippen verlaufende Führungsrippen ausgebildet sein. Hierdurch kann eine ungefähr linienförmige Berührung zwischen dem Stopfenteil und dem Stopfenhalter hergestellt werden, was ein leichtes Gleiten des Stopfenteils beim Einsetzen in den Stopfenhalter erlaubt und insbesondere ein Verklemmen beim Einsetzen vermeidet.

Gemäß einer vorteilhaften Weiterbildung der Erfindung ist eine Gegenlager-Einrichtung vorgesehen, mit der das Stopfenteil im auf den Stopfenhalter montierten Zustand in seiner Lage gegenüber dem Stopfenhalter in axialer Richtung fixiert ist. Durch eine solche Gegenlager-Einrichtung kann das Stopfenteil vorteilhaft sozusagen von seiner Rückseite her gehalten werden, während es auf der gegenüberliegenden Seite an dem Stopfenaufnahmeteil anliegt und gehalten wird, so dass, abgesehen von der zuvor erläuterten zugelassenen Relativbewegung zwischen dem Halteabschnitt und dem Stopfenhalter, größere Bewegungen in axialer Richtung verhindert werden. Die Gegenlager-Einrichtung kann z.B. in den Oberdeckel eines Akkumulatordeckels integriert sein.

Gemäß einer vorteilhaften Weiterbildung der Erfindung ist ein Stopfenaufnahmeelement vorgesehen, das eine innere Kammer zur Aufnahme des Stopfenteils und des Stopfenhalters aufweist. Das Stopfenaufnahmeelement ist mit einem Haltemittel zur Befestigung an dem Gehäuse versehen. Das Haltemittel kann beispielsweise als eine Schnappbefestigung oder ein Gewinde, über das das Stopfenaufnahmeelement in das Gehäuse geschraubt wird, ausgebildet sein. Das Stopfenaufnahmeelement erlaubt vorteilhaft eine einfache und sichere Anbringung des Stopfenteils an der gewünschten Stelle in dem Stopfenhalter.

Gemäß einer vorteilhaften Weiterbildung der Erfindung weist das Stopfenaufnahmeelement die Gegenlager-Einrichtung auf. Die Gegenlager-Einrichtung kann z.B. einstückig mit dem Stopfenaufnahmeelement hergestellt sein. Dies erlaubt eine kostengünstige Herstellung und einfache Anbringung der Verschlussstopfenanordnung in dem Akkumulator.

Gemäß einer vorteilhaften Weiterbildung der Erfindung weist ein Akkumulator ein Gehäuse der zuvor erläuterten Art auf.

Die Erfindung wird nachfolgend anhand von Ausführungsbeispielen unter Verwendung von Zeichnungen näher erläutert.

Es zeigen:
- Figur 1: - Ein Stopfenteil und
- Figur 2: - einen Stopfenhalter in seitlicher Querschnittsansicht und
- Figur 3: - den Stopfenhalter gem. Figur 2 in Draufsicht und
- Figur 4: - ein Stopfenteil in seitlicher Querschnittsansicht und
- Figur 5: - eine Draufsicht auf das Stopfenteil gem. Figur 4 und
- Figur 6: - eine Anordnung mit einem Stopfenaufnahmeelement und
- Figur 7: - ein Stopfenteil in perspektivischer Ansicht und
- Figur 8: - eine Akkumulatorzelle mit einer Verschlussstopfenanordnung.

In den Figuren werden gleiche Bezugszeichen für einander entsprechende Elemente verwendet.

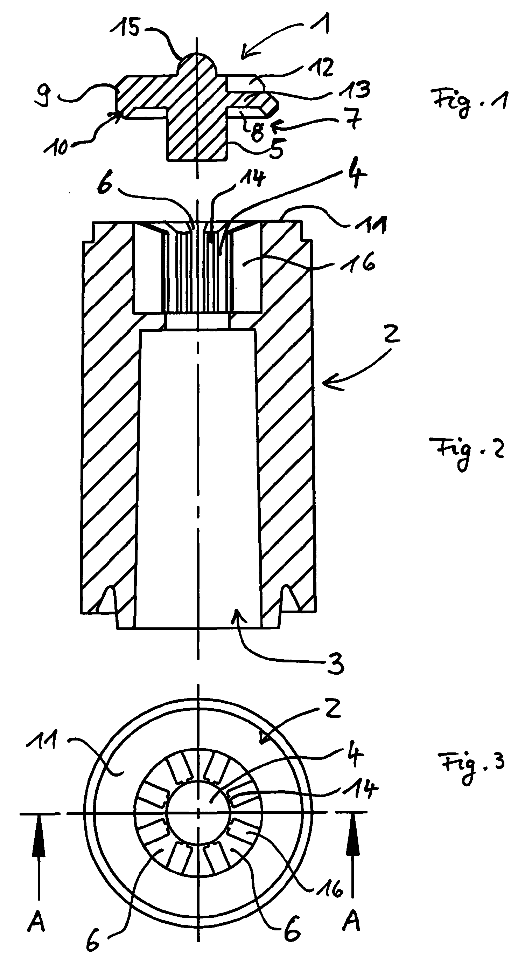

Im Folgenden wird zunächst auf die Figuren 1 bis 3 gemeinsam Bezug genommen. Die Figur 2 gibt dabei den in der Figur 3 in Draufsicht dargestellten Stopfenhalter 2 in einer seitlichen Querschnittsansicht in einem Schnitt A-A wieder. Die Figur 1 zeigt ein Stopfenteil 1 in demselben seitlichen Querschnitt.

Das Stopfenteil 1 weist einen Halteabschnitt 5 auf, der zur Anbringung in den Stopfenhalter 2 vorgesehen ist. Oberhalb des Halteabschnitts 5 weist das Stopfenteil 1 einen Kragen 9 auf, der um den Haltebereich 5 herum umlaufend ausgebildet und im Wesentlichen scheibenförmig ist. An seiner dem Stopfenhalter 2 zugewandeten Seite des Kragens 9 ist eine umlaufende Dichtwulst 10 vorgesehen. In Folge der Dichtwulst 10 wird um den Haltebereich 5 herum ein vertiefter Abschnitt 8 des Kragens 9 gebildet. Ein bestimmter Abschnitt der Dichtwulst 10 fungiert zusammen mit einer gegenüberliegenden Dichtfläche 11 des Stopfenhalters 2 als Überdrucksicherungsbereich 7. Im Bereich des Überdrucksicherungsbereichs 7 ist auf der dem Stopfenteil 2 und damit dem abzudichten Gehäuseraum abgewandten Seite des Kragens 9 eine Aussparung 12 vorgesehen. Durch die Aussparung 12 wird die Materialstärke des Kragens 9 in diesem Bereich verringert, so dass sich eine Stelle 13 mit erhöhter Flexibilität ergibt. Infolgedessen kann der Kragen 9 im Bereich des Überdrucksicherungsbereich 7 durch in der Vertiefung 8 anstehenden Gasdruck leichter verformt werden als die übrigen Abschnitte des Kragens 9. Durch eine Verformung des Kragens 9 im Überdrucksicherungsbereich 7 kann Gas aus dem Gehäuse ausgelassen werden.

Der Haltebereich 5 des Stopfenteils 1 ist zum Einsetzen in einen hohlen Bereich 4 des Stopfenhalters 2 vorgesehen. Der hohle Bereich 4 weist eine Mehrzahl von an der Innenseite des Stopfenhalters 2 angeordneten Rippen 16 auf, zwischen denen Strömungskanäle 6 gebildet werden. Die Rippen 16 weisen in Längsrichtung des Stopfenhalters 2 verlaufende, hervorstehende Zentrierelemente 14 in Form von Führungsrippen auf, durch die der Haltebereich 5 des Stopfenteils 1 in dem Stopfenhalter 2 zentriert wird. Der durch die Zentrierelemente 14 gebildete wirksame Innendurchmesser des hohlen Bereichs 4 ist etwas größer als der Außendurchmesser des Halteabschnitts 5. Hierdurch ist das Stopfenteil 1 mit etwas Spiel in dem Stopfenhalter 2 angebracht.

In einem Gehäuseraum 3 unter Überdruck stehendes Gas kann bei der in den Figuren 1 bis 3 dargestellten Anordnung über die Strömungskanäle 6 zu der Vertiefung 8 geführt werden und bei entsprechendem Überdruck eine Verformung des Kragens 9 im Bereich der Aussparung 12 und infolgedessen ein Öffnen der Abdichtung im Überdrucksicherungsbereich 7 bewirken. Hierdurch wird die Funktion einer Überdrucksicherung verwirklicht. Zudem liegt bei in den Stopfenhalter 2 eingesetztem Stopfenteil 1 die Dichtwulst 10 an der Dichtfläche 11 des Stopfenhalters 2 an. Hierdurch wird eine Abdichtung der Gehäuseöffnung 3 und damit des Inneren des Gehäuses gegenüber der äußeren Umgebung verwirklicht.

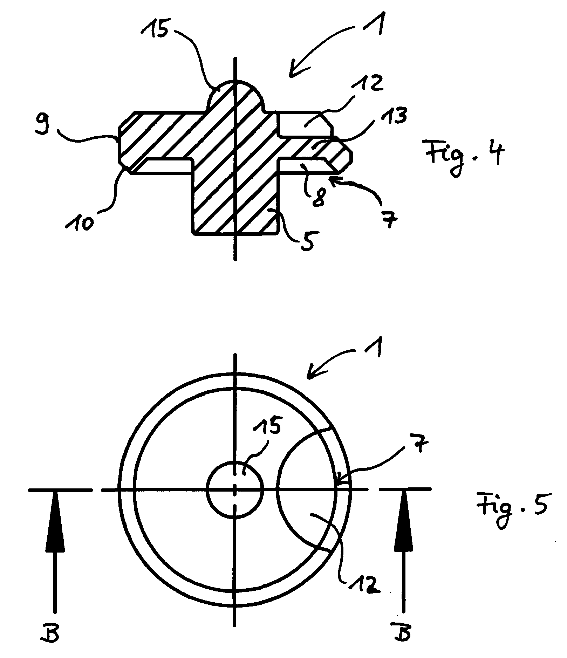

Die Figur 5 zeigt das Stopfenteil 1 in Draufsicht. In der Figur 4 ist das Stopfenteil 1 in einem seitlichen Querschnitt B-B dargestellt. Wie insbesondere in der Figur 5 erkennbar ist, weist die Aussparung 12 eine teilkreisförmige Kontur auf. Auch andere Konturen können vorteilhaft realisiert werden, z. B. eine elliptische Form oder eine gleichmäßige Verringerung der Materialdicke zu der Außenkontur des Kragens 9 hin.

Wie in der Fig. 4 erkennbar ist, ist an der dem Haltebereich 5 abgewandten Seite des Stopfenteils 1 ein Stempel 15 vorgesehen, der z. B. halbkugelförmig oder zylindrisch ausgestaltet sein kann. Auf die Funktion des Stempels 15 wird an späterer Stelle eingegangen.

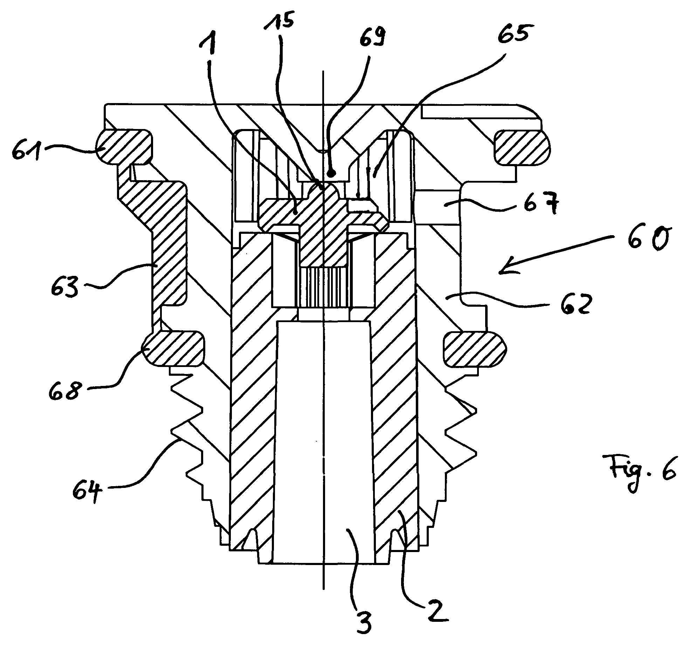

Die Figur 6 zeigt ein Stopfenaufnahmeelement 60. Das Stopfenaufnahmeelement 60 weist eine innere Kammer 65 auf, die zur Aufnahme des Stopfenteils 1 vorgesehen ist. Das Stopfenaufnahmeelement 60 weist einen Gehäusebereich 62 auf, der sich um den Umfang des Stopfenhalters 2 herum erstreckt und sich in Längsrichtung des Stopfenhalters 2 zumindest über einen gewissen Abschnitt des Stopfenhalters 2 hin erstreckt. Der Gehäuseabschnitt 62 weist ein Haltemittel 64 zur Befestigung an einem Gehäuse auf. Das Haltemittel 64 ist beispielsweise als Gewinde ausgebildet. Am Außenbereich des Stopfenaufnahmeelements 60 sind ein oberes Dichtelement 61 sowie ein unteres Dichtelement 68 vorgesehen. Die Dichtelemente 61, 68 können als umlaufende Dichtungsringe z. B. als O-Ringe, ausgebildet sein. In einer vorteilhaften Ausgestaltung sind die Dichtungsringe 61, 68 über ein Verbindungsstück 63 miteinander verbunden. Hierdurch kann eine einstückige Dichtungsanordnung mit den Dichtungsringen 61, 68 und dem Verbindungselement 63 hergestellt werden, z. B aus einem gummielastischen Material.

Das Stopfenaufnahmeelement 60 weist zudem eine Gasauslassstelle 67 auf, über die aus der Gehäuseöffnung 3 über den Überdrucksicherungsbereich 7 austretendes Gas abgeführt werden kann. Die Gasauslassstelle 67 mündet beispielsweise in einem Gassammelkanal, der im Falle einer Blei-Säure-Batterie zu einer zentralen Gasauslassstelle der Batterie führt, an der beispielsweise eine Explosionsschutzfritte vorgesehen sein kann.

Wie in der Figur 6 erkennbar ist, ist das Stopfenteil 1 in dem Stopfenhalter 2 derart angeordnet, dass die Dichtwulst 10 an der Dichtungsfläche 11 anliegt. Zur Sicherung des Stopfenteils 1 gegen eine Verschiebung in Längsrichtung (axiale Richtung) weist das Stopfenaufnahmeelement 60 eine Gegenlager-Einrichtung 69 auf, die mit dem Stopfenteil, und zwar in dem Ausführungsbeispiel gemäß Figur 6 mit dem Stempel 15, zur Anlage kommt. Hierdurch ist das Stopfenteil 1 in Längsrichtung fixiert. Durch geeignete Abstimmung der Dimensionen des Stempels 15 und der Gegenlager-Einrichtung 69 kann die Abdichtung, die durch die Dichtwulst 10 und die Dichtungsfläche 11 geschaffen wird, unter einer gewissen, erwünschten Vorspannung gehalten werden und hierdurch die gewünschte Dichtwirkung erzielt werden. Vorteilhaft ist die Vorspannung derart eingestellt, dass die Überdrucksicherungsfunktion bei einem vorbestimmten Überdruck im Gehäuseinneren anspricht und einen Gasströmungsweg freigibt.

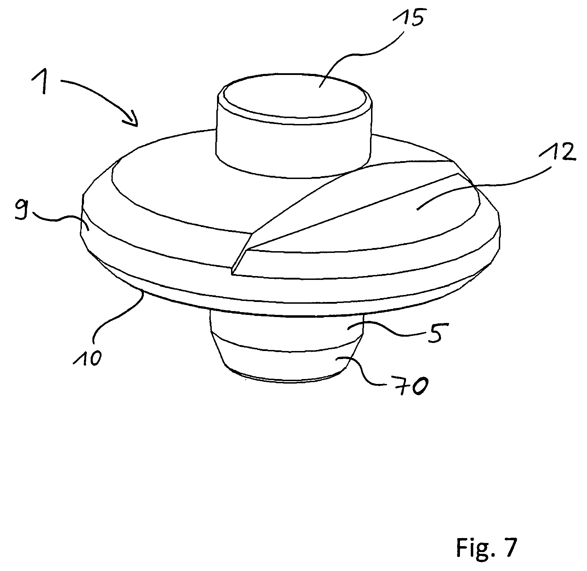

Die Figur 7 zeigt eine weitere Ausführungsform des Stopfenteils 1 in perspektivischer Darstellung. Die Ausführungsform gemäß Figur 7 weist einen im Wesentlichen zylindrisch geformten Stempel 15 auf. Durch die zylindrische Formung des Stempels 15 kann eine verbesserte Krafteinleitung von der Gegenlager-Einrichtung 69 in das Stopfenteil 1 erreicht werden, da die Federkraft-Kennlinie gegenüber der abgerundeten Formgebung gemäß Figur 4 linearisiert wird. Zudem kann eine bleibende (plastische) Verformung des Stempels 15 infolge von Setzung des Materials gegenüber der abgerundeten Formgebung verringert werden.

Zudem weist die Aussparung 12 in einer Draufsicht auf das Stopfenteil 1 eine im Wesentlichen lineare Kontur, d. h. eine in etwa gerade Linie, auf. Weiterhin weist der Halteabschnitt 5 einen zum Ende des Halteabschnitts 5 weisenden, konisch geformten Abschnitt 70. Der konische Abschnitt 70 dient als Einführschräge und erleichtert das Einführen des Stopfenteils 1 in den hohlen Bereich 4 des Stopfenhalters 2.

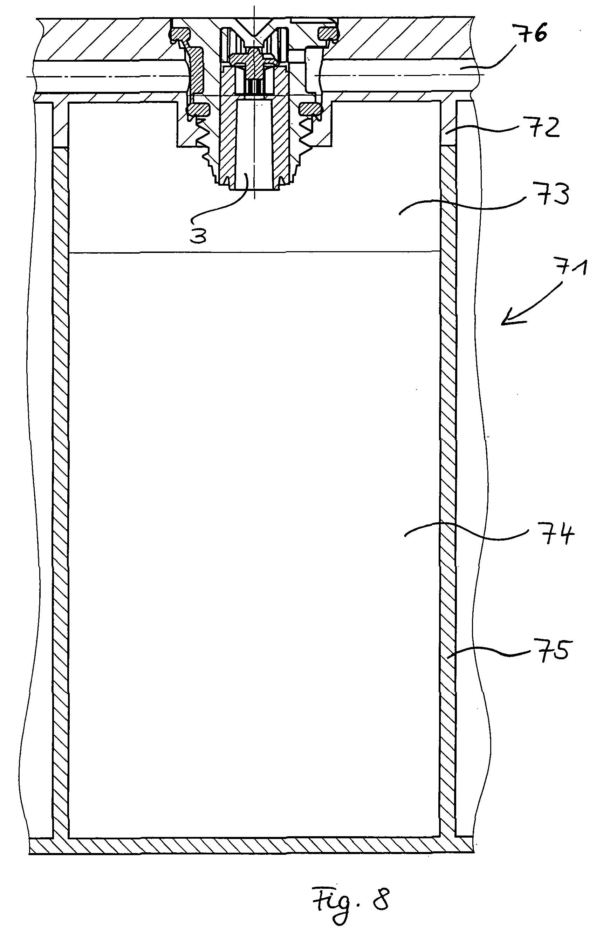

Die Figur 8 zeigt schließlich eine Anwendung der zuvor beschriebenen Anordnung mit dem Stopfenaufnahmeelement 60, dem Stopfenteil 1 und dem Stopfenhalter 2. Dargestellt ist ein Ausschnitt eines Gehäuse 71 eines Akkumulators, wobei eine Akkumulatorzelle beispielhaft gezeigt ist. Das Gehäuse 71 weist einen Gehäusekörper 75 und einen Deckel 72 auf. In einem Innenraum 73, 74 ist ein Gehäuseraum 74 vorgesehen, der zur Aufnahme von Flüssigkeit dient. In einem oberen Gehäuseraum 73 ist ein Gasraum vorgesehen. Über den Gehäuseraum 3 austretendes Gas gelangt in einen zentralen Gassammelkanal 76, der zu der erwähnten zentralen Gasauslassstelle des Akkumulators führt. Das in der Figur 8 dargestellte Gehäuse 71 kann vorteilhaft das Gehäuse eines Akkumulators, z. B. einer Blei-Säure-Batterie, sein.

## Patentansprüche

1. Verschlussstopfenanordnung (1, 2) für einen Akkumulator, wobei die Verschlussstopfenanordnung wenigstens ein Stopfenteil (1) und einen Stopfenhalter (2) aufweist, der Stopfenhalter (2) einen hohlen Bereich (4) zur Aufnahme zumindest eines Halteabschnitts (5) des Stopfenteils (1) in dem hohlen Bereich aufweist, wobei das Stopfenteil (1) bei Anbringung des Halteabschnitts im hohlen Bereich (4) des Stopfenhalters (2) zur Abdichtung wenigstens eines Innenraums (73, 74) des Akkumulators gegenüber der Umgebung eingerichtet ist, **dadurch gekennzeichnet, dass** der Stopfenhalter (2) an seiner Innenseite im hohlen Bereich (4) wenigstens einen Strömungskanal (6) aufweist, der sich mindestens entlang desjenigen Bereichs erstreckt, in dem das Stopfenteil (1) bei Anbringung im hohlen Bereich (4) in dem Stopfenhalter (2) gehalten wird.

2. Verschlussstopfenanordnung nach Anspruch 1, **dadurch gekennzeichnet, dass** der Strömungskanal (6) sich bis zu einem Überdrucksicherungsbereich (7) hin erstreckt.

3. Verschlussstopfenanordnung nach Anspruch 1 oder 2, **dadurch gekennzeichnet, dass** das Stopfenteil (1) einen Kragen (9) aufweist, der einen Anschlag beim Einsetzen des Stopfenteils (1) in den Stopfenhalter (2) bildet.

4. Verschlussstopfenanordnung nach Anspruch 3, **dadurch gekennzeichnet, dass** der Kragen (9) eine beim Einsetzen des Stopfenteils (1) in den Stopfenhalter (2) in Richtung des Stopfenhalters (2) weisende Dichtwulst (10) aufweist, die zur Anlage an einer Dichtungsfläche (11) des Stopfenhalters (2) vorgesehen ist.

5. Verschlussstopfenanordnung nach wenigstens einem der vorhergehenden Ansprüche, **dadurch gekennzeichnet, dass** das Stopfenteil (1) an seiner von dem Halteabschnitt (5) abgewandten Seite im Bereich des Überdrucksicherungsbereichs (7) eine Aussparung (12) aufweist.

6. Verschlussstopfenanordnung nach Anspruch 5, **dadurch gekennzeichnet, dass** die Aussparung (12) in einer Draufsicht auf das Stopfenteil (1) eine im wesentlichen lineare oder teilkreisförmige Kontur aufweist.

7. Verschlussstopfenanordnung nach wenigstens einem der vorhergehenden Ansprüche **dadurch gekennzeichnet, dass** das Stopfenteil (1) im Bereich des Überdrucksicherungsbereichs (7) eine Stelle (13) mit erhöhter Flexibilität aufweist.

8. Verschlussstopfenanordnung nach wenigstens einem der vorhergehenden Ansprüche **dadurch gekennzeichnet, dass** das Stopfenteil (1) wenigstens zum Teil aus gummielastischem Material besteht.

9. Verschlussstopfenanordnung nach wenigstens einem der vorhergehenden Ansprüche **dadurch gekennzeichnet, dass** der Stopfenhalter (2) an seiner Innenseite im hohlen Bereich (4) eine Mehrzahl von Strömungskanälen (6) aufweist.

10. Verschlussstopfenanordnung nach wenigstens einem der vorhergehenden Ansprüche, **dadurch gekennzeichnet, dass** der wirksame Innendurchmesser des hohlen Bereichs (4) größer als der Außendurchmesser des Halteabschnitts (5).

11. Verschlussstopfenanordnung nach wenigstens einem der vorhergehenden Ansprüche, **dadurch gekennzeichnet, dass** der Stopfenhalter (2) an seiner Innenseite im hohlen Bereich (4) auf zwischen den Strömungskanälen (6) gebildeten Rippen (16) angeordnete, hervorstehende Zentrierelemente (14) aufweist.

12. Verschlussstopfenanordnung nach wenigstens einem der vorhergehenden Ansprüche, **dadurch gekennzeichnet, dass** eine Gegenlager-Einrichtung (69) vorgesehen ist, mit der das Stopfenteil (1) im auf dem Stopfenhalter (2) montierten Zustand in seiner Lage gegenüber dem Stopfenhalter (2) in axialer Richtung fixiert ist.

13. Verschlussstopfenanordnung nach wenigstens einem der vorhergehenden Ansprüche, **dadurch gekennzeichnet, dass** ein Stopfenaufnahmeelement (60) vorgesehen ist, das eine innere Kammer (65) zur Aufnahme des Stopfenteils (1) und des Stopfenhalters (2) aufweist und mit einem Haltemittel (64) zur Befestigung an dem Gehäuse (71) versehen ist.

14. Verschlussstopfenanordnung nach Anspruch 13, **dadurch gekennzeichnet, dass** das Stopfenaufnahmeelement (60) die Gegenlager-Einrichtung (69) aufweist.

15. Akkumulator mit einer Verschlussstopfenanordnung (1, 2) nach wenigstens einem der vorhergehenden Ansprüche.

## Claims

1. A sealing plug arrangement (1, 2) for an accumulator, wherein the sealing plug arrangement comprises at least one plug part (1) and one plug holder (2), the plug holder (2) having a hollow region (4) for receiving at least one retaining section (5) of the plug part (1) in said hollow region, wherein the plug part (1) is designed to seal at least one interior space (73, 74) of the accumulator from the surrounding area when the retaining section is fit into the hollow region (4) of the plug holder (2),
**characterized in that**
the plug holder (2) has at least one flow channel (6) on its internal side in the hollow region (4) extending at least along that region in which the plug part (1) is held in the plug holder (2) upon being inserted into the hollow region (4).

2. The sealing plug arrangement according to claim 1,
**characterized in that**
the flow channel (6) extends as far as an overpressure protection area (7).

3. The sealing plug arrangement according to claim 1 or 2,
**characterized in that**
the plug part (1) comprises a collar (9) which forms a stop upon the plug part (1) being inserted into the plug holder (2).

4. The sealing plug arrangement according to claim 3,
**characterized in that**
the collar (9) comprises a sealing bead (10) facing in the direction of the plug holder (2) when the plug part (1) is inserted into said plug holder (2) which is designed to rest against a sealing surface (11) of the plug holder (2).

5. The sealing plug arrangement according to at least one of the preceding claims,
**characterized in that**
the plug part (1) has a cut-out (12) on its far side from the holding section (5) in the region of the overpressure protection area (7).

6. The sealing plug arrangement according to claim 5,
**characterized in that**
the cut-out (12) has a substantially linear or partially circular contour when the plug part (1) is viewed from above.

7. The sealing plug arrangement according to at least one of the preceding claims,
**characterized in that**
the plug part (1) has a position (13) of increased flexibility in the region of the overpressure protection area (7).

8. The sealing plug arrangement according to at least one of the preceding claims,
**characterized in that**
the plug part (1) is at least partially composed of rubber-elastic material.

9. The sealing plug arrangement according to at least one of the preceding claims,
**characterized in that**
the plug holder (2) has a plurality of flow channels (6) on its internal side in the hollow region (4).

10. The sealing plug arrangement according to at least one of the preceding claims,
**characterized in that**
the effective internal diameter of the hollow region (4) is larger than the external diameter of the retaining section (5).

11. The sealing plug arrangement according to at least one of the preceding claims,
**characterized in that**
the plug holder (2) exhibits projecting centering elements (14) arranged on ribs (16) formed between the flow channels (6) on its internal side in the hollow region (4).

12. The sealing plug arrangement according to at least one of the preceding claims,
**characterized in that**
a counter-bearing device (69) is provided with which the plug part (1) is axially fixed in position relative to the plug holder (2) in its mounted state on the plug holder (2).

13. The sealing plug arrangement according to at least one of the preceding claims,
**characterized in that**
a plug receiving element (60) is provided which comprises an inner chamber (65) for receiving the plug part (1) and the plug holder (2) and which is provided with retaining means (64) for fixing to the housing (71).

14. The sealing plug arrangement according to claim 13,
**characterized in that**
the plug receiving element (60) comprises the counter-bearing device (69).

15. An accumulator comprising a sealing plug arrangement (1, 2) according to at least one of the preceding claims.

## Revendications

1. Agencement formant bouchon de fermeture (1, 2) pour un accumulateur, dans lequel l'agencement formant bouchon de fermeture comprend au moins une partie de bouchon (1) et un porte-bouchon (2), le porte-bouchon (2) comprenant une zone creuse (4) pour la réception d'au moins une portion de maintien (5) de la partie de bouchon (1) dans la zone creuse, dans lequel la partie de bouchon (1) est conçue, lors de l'introduction de la portion de maintien dans la zone creuse (4) du porte-bouchon (2), pour l'étanchement d'au moins une chambre intérieure (73, 74) de l'accumulateur vis-à-vis de l'environnement,
**caractérisé en ce que**
le porte-bouchon (2) comporte, sur sa face intérieure dans la zone creuse (4), au moins un canal d'écoulement (6) qui s'étend au moins le long de la région dans laquelle la partie de bouchon (1) est maintenue dans le porte-bouchon (2) lors de l'introduction dans la zone creuse (4).

2. Agencement formant bouchon de fermeture selon la revendication 1,
**caractérisé en ce que**
le canal d'écoulement (6) s'étend jusque dans une zone de sécurisation de surpression (7).

3. Agencement formant bouchon de fermeture selon la revendication 1 ou 2,
**caractérisé en ce que**
la partie de bouchon (1) comporte une collerette (9) qui forme une butée lors de la mise en place de la partie de bouchon (1) dans le porte-bouchon (2).

4. Agencement formant bouchon de fermeture selon la revendication 3,
**caractérisé en ce que**
la collerette (9) comprend un bourrelet d'étanchéité (10), qui est tourné en direction du porte-bouchon (2) lors de la mise en place de la partie de bouchon (1) dans le porte-bouchon (2) et qui est prévu pour venir en contact contre une surface d'étanchéité (11) du porte-bouchon (2).

5. Agencement formant bouchon de fermeture selon l'une au moins des revendications précédentes,
**caractérisé en ce que**
la partie de bouchon (1) comporte un évidement (12) sur son côté détourné de la portion de maintien (5) dans la région de la zone de sécurisation de surpression (7).

6. Agencement formant bouchon de fermeture selon la revendication 5,
**caractérisé en ce que**
l'évidement (12) présente, dans une vue de dessus sur la partie de bouchon (1), un contour sensiblement linéaire ou de forme partiellement circulaire.

7. Agencement formant bouchon de fermeture selon l'une au moins des revendications précédentes,
**caractérisé en ce que**
la partie de bouchon (1) comprend, dans la région de la zone de sécurisation de surpression (7), un emplacement (13) à plus grande flexibilité.

8. Agencement formant bouchon de fermeture selon l'une au moins des revendications précédentes,
**caractérisé en ce que**
la partie de bouchon (1) est constituée au moins partiellement d'un matériau présentant l'élasticité du caoutchouc.

9. Agencement formant bouchon de fermeture selon l'une au moins des revendications précédentes, **caractérisé en ce que** le porte-bouchon (2) comporte une pluralité de canaux d'écoulement (6) sur sa face intérieure dans la zone creuse (4).

10. Agencement formant bouchon de fermeture selon l'une au moins des revendications précédentes,
**caractérisé en ce que**
le diamètre intérieur efficace de la zone creuse (4) est plus grand que le diamètre extérieur de la portion de maintien (5).

11. Agencement formant bouchon de fermeture selon l'une au moins des revendications précédentes,
**caractérisé en ce que**
le porte-bouchon (2) comporte, sur sa face intérieure dans la zone creuse (4), des éléments de centrage en dépassement (14), agencés sur des nervures (16) formés entre les canaux d'écoulement (6).

12. Agencement formant bouchon de fermeture selon l'une au moins des revendications précédentes,
**caractérisé en ce qu'il**
est prévu un moyen de montage antagoniste (69) avec lequel la partie de bouchon (1) est fixée en direction axiale dans sa situation par rapport au porte-bouchon (2) dans l'état monté sur le porte-bouchon (2).

13. Agencement formant bouchon de fermeture selon l'une au moins des revendications précédentes,
**caractérisé en ce qu'il**
est prévu un élément récepteur de bouchon (60) qui comprend une chambre intérieure (65) pour recevoir la partie de bouchon (1) et le porte-bouchon (2) et qui est doté d'un moyen de retenue (64) pour la fixation sur le boîtier (71).

14. Agencement formant bouchon de fermeture selon la revendication 13,
**caractérisé en ce que**
l'élément récepteur de bouchon (60) comprend le moyen de montage antagoniste (69).

15. Accumulateur comprenant un agencement formant bouchon de fermeture (1, 2) selon l'une au moins des revendications précédentes.
